# EUROPEAN PATENT SPECIFICATION

(11) **EP 4 200 356 B1**
(45) Date of publication and mention of the grant of the patent: **20.08.2025**
(21) Application number: 20761225.0
(22) Date of filing: 24.08.2020
(51) Int. Cl.: C08G 65/40, C08G 75/23, C08L 71/12, C08L 81/06

(54) **POLYPHENYLENE SULFONE**
POLYPHENYLENSULFON
POLY(PHÉNYLÈNE SULFONE)

(43) Date of publication of application: 28.06.2023
(73) Proprietor: BASF SE, 67056 Ludwigshafen (DE)
(72) Inventor: WEBER, Martin, 67056 Ludwigshafen (DE); HENNENBERGER, Florian, 67056 Ludwigshafen (DE); MALETZKO, Christian, 67056 Ludwigshafen (DE); WILMS, Axel, 67227 Frankenthal (DE)
(74) Representative: BASF IP Association
(86) International application number: PCT/EP2020/073596
(87) International publication number: WO 2022/042814

(56) References cited:
- EP-A1- 0 001 879
- EP-A2- 0 278 720
- WO-A1-2009/077553
- WO-A2-02/075835
- WO-A2-2008/116844
- CN-A- 103 613 763
- CN-A- 103 642 031
- CN-A- 104 497 300
- CN-A- 105 348 531
- CN-A- 106 167 548
- US-A- 4 766 197

## Description

The present invention relates to polyphenylene sulfones based on phenylene sulfone segments which are linked to each other by a benzophenone group.

Polyarylene ether sulfones and polyarylene ether ketones are classified as high-performance thermoplastics. Certain methods of preparation and certain properties of copolymers of polyarylene ether sulfones and polyarylene ether ketones are disclosed.

Thus EP 278 720 A2 discloses crystalline copolymers with a molar content of ketone units of from 50 to 92 mol % and polyphenylene sulfone (PPSU) containing units of a chain length of 1 to 3.5. They are obtained by a process in which the blocks containing the ketone units are polymerized first.

CN 106167548 A discloses the reaction of DCDPS to which 3-fluoro-4-chlorobenzophenone is added in ppm amounts followed by the addition of biphenyl. It further discloses that the reaction is stopped by the addition of 3-fluoro-4-chlorobenzophenone.

US 4,268,635 for instance describes the preparation of blockcopolymers whereby a suspension of crystalline polyether ketone or etherketone/sulfone copolymer is employed.

Polyphenylene sulfone ketones prepared from a mixture of 4,4'-biphenol, 4,4'-dichlorodiphenylsulfone (DCDPS) and benzophenone substituted in the 4,4'-position with fluoro, chloro or hydroxygroups are described in EP 2 225 328.

Blockpolycondensates prepared from 4,4 ' -biphenol, DCDPS, 4,4'-difluro and/or dihydroxybenzophenone are disclosed in EP 332 012 as a component of a high-temperature resistant thermoplastic composition.

WO200977553A1 is directed to a one-step process for the production of polysulfones containing benzophenone units. No explicit disclosure can be found to the linear PPSU polymers with benzophenone units of the present invention. Furthermore, carrying out the polymerization in one step, i.e. adding the three monomers at once, results in randomly distributed units within the polymer. In contrast thereto, the present invention has defined ("oligomer") blocks of polysulfone (PPSU) with benzophenone units incorporated between these defined oligomers.

CN104497300A (machine translation), CN103613763A (machine translation) and CN103642031A (machine translation) disclose high-liquidity poly(phenylene ether sulfone ketone) resins, wherein "..the main molecular chain obtained by polymerization contains a polyether sulphone and polyaryletherketone random copolymerized structure···". In contrast thereto, in the PPSU polymers of the present invention the benzophenone units are built-in between defined PPSU building blocks ("oligomers"). CN105348531A (machine translation) relates to a method for preparing "random segmented copolymer containing polyether-ether-ketone and polyaryl ether ketone sulfone through quarternary copolycondensation technology". The polymers obtained contain "four repetitive unit structures of PEEK, PPSU, PEES and PEDEK and the reaction conditions vield randomly distributed structural units.

US 4,766197 describes modified poly(aryl ether ketones) derived from biphenol. This reference does not give any hint to the specific PPSU/ketone copolymers of the present invention. The educts are reacted in one step which makes the formation of oligomer building blocks from dihalodiphenyl and biphenol impossible but results in randomly distributed structural units.

WO 2002075835 A2 displays the reaction of 4,4-difluorobenzophenone, 4,4-dichlorodiphenylsulfone, 4,4-dihydroxybiphenyl and 4,4-dihydroxybenzophenone, wherein all the reactants are added in one step. This results in randomly distributed units within the polymer and not in the polymers as claimed in the present.

The problem addressed by the present disclosure is to present a new polyphenylene sulfone which exhibits a good resistance against hydraulics fluids, petrol and/or fuel, in particular with a view to resistance against flame retardant hydraulic fluids. Furthermore, the new polyphenylene sulfone should offer good processing stability at elevated temperatures, in particular in combination with good resistance against flame retardant hydraulic fluids. Moreover, said polyphenylene sulfone should support the manufacture of coatings, fibers, films, foams and shaped articles. One motivation was to present a new polyphenylene sulfone which is suitable for the manufacture of membranes. Membranes suitable for the purification of produced water were aimed at, in particular for the use in fuel and oil production. Further, a process for the manufacture of said new polyphenylene sulfone should be provided which is facile and therefore lends itself in particular for the production in industrial scale, e.g. the salt separation should be possible in short filtration time.

Hereinunder a polypenylene sulfone (PPSU) is disclosed which consists essentially of benzophenone coupled phenylene sulfone segments A and B of formula I 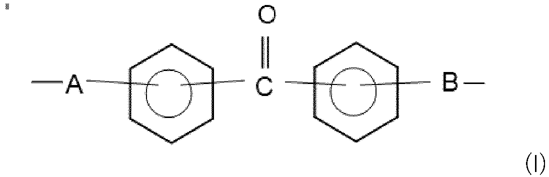 wherein segments A and B can be same or different and are of formula II 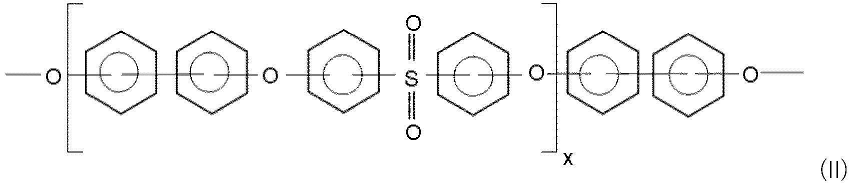 wherein x is in the range from 4.5 to 9.

Further disclosed is a solution comprising the PPSU. Also, a process for making the PPSU is disclosed which comprises reacting at least one dihalodiphenylsulfone with at least one dihydroxybiphenyl to give phenylene sulfone oligomers of a number average degree of polymerization of 4.5 to 9 (in the following also termed chain length x) and reacting said oligomers with at least one dihalobenzophenone. The use of the, respectively the so obtained PPSU as well as the solution comprising the PPSU in the manufacture of a coating, fiber, film, foam, molding and/or membrane is disclosed as well. Likewise, a membrane comprising said or the so obtained PPSU and an article comprising said membrane is disclosed. In addition, the use of the membrane in the purification of water is disclosed.

In the following "at least one" in general means one or two or more, such as three or four or five or more, wherein more may mean a plurality or an uncountable. For instance, "at least one" may mean one or a mixture of two or more. If used in connection with chemical compounds "at least one" is meant in the sense that one or two or more chemical compounds differing in their chemical constitution, that is chemical nature, are described.

In the following "polymer" may mean homopolymer or copolymer or a mixture thereof. The person skilled in the art appreciates that any polymer, may it be a homopolymer or a copolymer by nature typically is a mixture of polymeric individuals differing in their constitution such as number average degree of polymerization, degree of branching or nature of end groups. This fact is also often described as distribution. Thus, in the following "at least one" as prefix to a polymer means that different types of polymers may be encompassed whereby each type may have a certain distribution addressed above.

The person skilled in the art further appreciates that any polymer is derived from monomers or oligomers or mixtures thereof which the polymer then comprises in reacted, polymerized form.

In the following
- starting compounds: are at least one dihalodiphenylsulfone, and at least one dihydroxybiphenyl
- coupling agent: is at least one dihalobenzophenone
- solvent L: is at least one solvent
- compound C: is at least one compound with one functional group reactive towards reactive groups in a polymeric chain

The polypenylene sulfone (PPSU) consists essentially of benzophenone coupled phenylene sulfone segments A and B of formula I. Thus, the PPSU is entirely or essentially entirely composed of said coupled segments. Optionally, the PPSU may contain minor amounts of units that are structurally different. If the PPSU contains such structurally different units, it is generally preferred that not more than 10 mol%, such as not more than 5 mol%, whereby not more than 1 mol% or 2 mol% is usually more preferred, based on the moles of starting compounds are comprised. Generally, it may be most preferred that the PPSU does not comprise such structurally different units.

Segments A and B can be same of different. Segments A and B can for instance differ in chain length x which is in the range from 4.5 to 9 such as 4.5 to 8, 4.5 to 7 or 4.5 to 6, or 4.5 to 5. Very good results with respect to the aimed at properties were obtained for PPSU consisting essentially of benzophenone coupled phenylene sulfone segments A and B of formula I wherein the segments A and B which can be same or different and have a chain length x of from 4.5 to 7.

It is also possible that segments A and B differ in degree of linearity. Thus, both segments may be linear. One or both segments may be non-linear. It is also possible that A and B differ in chain length x as well as in degree of linearity. Typically, and as it may be preferred, segments A and B are both linear and have the same or different chain length x.

The units which are structurally different from the coupled segments are not particularly limited, provided they support the technical properties sought for the PPSU, in particular the good resistance against hydraulic fluids, petrol and/or fuel, the processing stability, as well as the ease of production. Such units may for instance be derived from monomers typically employed for the manufacture of polyarylene ether sulfones and/or polyarylene ether ketones.

The nature of the end groups of the PPSU is not particularly limited. Generally, it may depend on if reactive or non-reactive end groups are desired as end groups. Reactive end groups may for instance be preferred if it is intended to polymerize the PPSU with at least one further monomer or polymer to yield a copolymer such as a block copolymer or a polymer network. Possible end groups are phenolic OH end groups or phenolate end groups, phenolic alkoxy end groups, among which -OCH₃ end groups may be preferred, amino end groups, among which -NH₂ may be preferred, halogen end groups, which can in particular be -F or -Cl. Cl may be most preferred among the halogen end groups. It is also possible that the end groups are phthalic anhydride end groups. The end groups can be of one type or can be different from each other. Generally, it may be preferred that the end groups are Cl-, OH- and/or -OCH₃. Often inert end groups are accessible by endcapping reactive end groups. In the case that the PPSU is intended for an application which is accessible by a method of production through solution, such as solution spinning or casting from solution, endcapping may not be required. PPSU which is not endcapped may in particular be useful in conjunction with membrane production. In this case PPSU which has Cl and/or OH end groups may be advantageous. Very good results, for the production of membranes or articles comprising same, in particular for the treatment of water, more specifically the treatment of produced water, were obtained for PPSU comprising -OCH₃ endgroups, whereby PPSU, wherein the endgroups consist essentially of -OCH₃, for example wherein 98%, such as 99% or more of all endgroups are -OCH₃ endgroups, typically is more preferred.

The PPSU can preferably have a relative viscosity of 0.20 to 1.30 dl/g, especially of 0.30 to 0.95. According to the solubility of the PPSU, the relative viscosity can be measured in 1% by weight N-methylpyrrolidone solution or in mixtures of phenol and dichlorobenzene, in each case at 20°C or 25°C.

The PPSU can preferably have a mean molecular weight Mn (number average) in the range from 7.500 to 60 000 g/mol, especially 8000 to 45 000 g/mol, determined by means of gel permeation chromatography (GPC). The weight-average molar mass Mw of the PPSU may preferably be from 14000 to 120 000 g/mol, in particular it may be from 18 000 to 100 000 g/mol and it may be particularly preferably be from 25 000 to 80 000 g/mol, determined by GPC. Thereby Mn as well as Mw can be determined by GPC in dimethylacetamide as solvent against narrowly-distributed polymethyl methacrylate as standard (calibration between 800 to 1820000 g/mol), using 4 columns (pre-column, 3 separation columns based on polyester copolymers) operated at 80°C and a flow rate set to 1 ml/min, injection volume of 100 µl. For detection an RI-detector can be employed.

In view of the ease of production from a PPSU solution it may be preferred that the PPSU essentially consists of benzophenone coupled linear segments A and B where segments A and B can be same or different and wherein x is in the range of 4.5 to 9 and Mw is in the range of 25 000 to 80 000 g/mol (determined as described above) and that the PPSU comprising -OCH₃ and -Cl end groups, whereby not more than 1 mol-% of further units, based on the moles of starting compounds are comprised and whereby it may be more preferred that no further units are comprised.

In view of the ease of extruding or of injection molding the PPSU it is advantageous that it has a good melt stability. The melt stability can be determined by comparing the apparent melt viscosity at a given time with the apparent melt viscosity at a later time. The ratio Q of both is then a measure of the melt stability. It is preferred that the PPSU has a Q-value of 1.5 or less, more preferably of less than 1.5, whereby Q can be determined as given in the examples.

The PPSU disclosed can advantageously be prepared by a process which comprises - whereby it may be preferred that it consists essentially of - reacting at least one dihalodiphenylsulfone with at least one dihydroxybiphenyl to give phenylene sulfone oligomers of a chain length x of from 4.5 to 9 and reacting said oligomers with at least one dihalobenzophenone. Thereby, the structure of the phenylene sulfone oligomeric chain can be schematically represented by formula (II).

In view of ease of production in industrial scale it may be preferred to react one or two, in particular one dihalophenylsulfone with one or two, in particular one dihydroxybiphenyl to give phenylene sulfone oligomers. For the same reason it may be preferred to react the phenylene sulfone oligomers with one or two, in particular one dihalobenzophenone. Thereby, very good results were observed reacting phenylene sulfone oligomers - obtained from reacting one dihalodiphenylsulfone with one dihydroxybiphenyl - with one dihalobenzophenone to the PPSU.

The at least one dihalophenylsulfone can be a 4,4'-substituted phenylsulfone. Dihalophenylsulfone with other substitution pattern is also possible to use, e.g. the 2,4'- or the 2,2'-subsituted dihalophenylsulfone. The at least one dihydroxybiphenyl can be a 4,4'-substituted biphenyl. Dihydroxybiphenyl with other substitution pattern is also possible to use, e.g. the 2,4'- or the 2,2'-subsituted dihydroxybiphenyl. Reacting at least one 4,4'-substituted dihalophenylsulfone with at least one 4,4'-substituted biphenyl gives rise to linear phenylene sulfone oligomers. The person skilled in the art appreciates that otherwise phenylene sulfone oligomers are obtained which are non-linear. The person skilled in the art further appreciates that depending on the combination and the amount of the dihalophenyl-sulfone and dihydroxybiphenyl with other substitution pattern the degree of linearity of the phenylene sulfone oligomers can vary.

The at least one dihalobenzophenone can be a 2,2'-, or 2,4'-, or 4,4'-substituted benzophenone. Reacting linear phenylene sulfone oligomers with a 4,4'-substituted benzophenone gives rise to PPSU consisting essentially of benzophenone coupled linear phenylene sulfone segments A and B and PPSU which is linear. The person skilled in the art appreciates that otherwise PPSU is obtained which is non-linear. The person skilled in the art further appreciates that depending on the combination and the amount of non-linear polyphenylene oligomers and/or dihalobenzophenone which has a 2,2 ' or 2,4'-substitution pattern PPSU with differing degree of linearity is obtained. These may have a lower solution viscosity compared to corresponding linear PPSU with comparable molecular weight and may therefore be generally better processable from solution, in particular for the manufacture of membranes. Linear PPSU may be preferred in particular with view of the ease of production, in particular in industrial scale as well as the good overall technical results observed. Under this aspect it may be even more preferred that the PPSU is linear, where x is in the range of 4.5 to 7, the M_{W} is in the range of 25000 to 80000 g/mol (determined as described above) and the endgroups consist essentially of - OCH₃ and Cl, whereby it may be preferred that 60 bis 90%, in particular 70 bis 85 of said endgroups are -OCH₃ and whereby no further units are comprised in the PPSU.

While other halogen groups are possible typically fluorine and/or chlorine are the preferred halogen in the at least one dihalodiphenyl sulfone and the at least one dihalobenzophenone respectively.

Exampes of dihalodiphenyl sulfone are 4,4'-dichlorodiphenyl sulfone, 4,4'-difluorodiphenyl sulfone, 4,4'-dibromodiphenyl sulfone, 2,2'-dichlorodiphenyl sulfone, 2,2'-difluorodiphenyl sulfone, particular preference can be given to 4,4'-dichlorodiphenyl sulfone (DCDPS) and/or 4,4'-difluorodiphenyl sulfone if linear PPSU is sought. Examples of dihalobenzophenone are 4,4'-dichlorobenzophenone, 4,4 ' -difluorobenzophenone, 2,2-dichlorobenzophenone, 2,4-dichlorobenzophenone, 2,2 ' -fluorobenzophenone and/or 2,4'difluorobenzophenone, whereby particular preference can be given to 4,4'-dichlorobenzophenone and/or 4,4'-difluorobenzophenone if linear PPSU is sought.

The process for making the PPSU comprises - whereby it may be preferred that it consists essentially of - reacting the starting compounds to give phenylene sulfone oligomers of the above specified chain length and reacting said oligomers with the coupling agent. The process may comprise using preformed oligomers, for instance oligomers formed in a separate reaction device or oligomers which are isolated prior to reacting them with the coupling agent. Preference is mostly given to a process which comprises - whereby it may be preferred that the process consists essentially of - that the reacting is carried out as a one-pot reaction. Such one-pot reaction is typically a conveniently robust process. In this case the starting compounds are reacted to the oligomers until the desired chain length is reached and without isolating the oligomers they are reacted with the coupling agent.

The starting compounds enter into a polycondensation reaction to give the phenylene sulfone oligomers which can typically be carried out in the presence of at least catalytic amounts of a base. It may be carried out in the absence or as it may be preferred the presence of a solvent L. A reaction mixture is formed. The components of the reaction mixture are generally reacted concurrently. The individual components may be mixed in an upstream step and subsequently be reacted. It is also possible to feed the individual starting components into a reactor in which these are mixed and then reacted. It may be preferred that the polycondensation reaction to give the phenylene sulfone oligomers is carried out in one stage. This means that the deprotonation of the starting compounds which have OH-groups and also the condensation reaction thereof with the starting compounds which have halo-groups takes place in one single reaction stage without isolation of the intermediate products.

The general knowledge of the preparation of polymers in the field of polyarylene ether sulfones with simultaneous control can be applied to the phenylene sulfone oligomers and is more specifically described in detail below. For the phenylene sulfone oligomers it can for instance be achieved by the control of the amounts of functional groups of the starting compounds, that is to say which they have prior to being polymerized. The ratios of the starting compounds to be used derive in principle from the stoichiometry of the polycondensation reaction which proceeds with theoretical elimination of hydrogen halide, such as hydrogen chloride, and are established by the person skilled in the art in a known manner.

It is generally preferred that the molar ratios of the functional groups of the starting compounds which are reactive towards each other are controlled or adjusted. Thus, the molar ratios of halogen groups and hydroxy groups can vary, depending on factors such as control of end groups or control of reaction speed and chain length x of the phenylene sulfone oligomers.

Thus, for instance the chain length x of the phenylene sulfone oligomers comprising phenolate end groups can be adjusted using a defined off-set of the stoichiometric ratio between the starting compounds with halogen groups and hydroxy groups. Generally the molar ratios are not more than 0.80 : 1 to 0.895 : 1, such as 0.80 : 1 to 0.85 : 1.

Phenylene sulfone oligomers with phenolic end groups can be reacted with dihalobenzophenone. The molar ratio of the phenylene sulfone oligomers and the dihalobenzophenone can vary, depending on factors such as control of end groups or control of reaction speed and molecular weight of the PPSU. Thus, usually a defined off-set of moles of phenylene sulfone oligomers and dihalobenzophenone is established. Under the aspect of ease of production, it is generally preferred to prepare phenylene sulfone oligomers with an excess of starting compound with hydroxy groups and to react the phenylene sulfone oligomers with dihalobenzophenone. On a molar basis the ratio of phenylene sulfone oligomer OH groups to benzophenone halogen groups may in this case be from 0.70 : 1 to 1:1, especially from 0.75 : 1 to 0.95 : 1, most preferably from 0.75 : 1 to 0.90 : 1.

In principle the process can be carried out in the absence of a solvent. In particular in cases in which a very light color of the PPSU is aimed at, the process can mostly more advantageously be carried out in the presence of at least one solvent (solvent L).

Solvent L which may be preferred in the context of the present process, is N-methyl-2-pyrrolidone (NMP) or N-ethyl-2-pyrrolidone (NEP), dimethylacetamide (DMAC), sulfolane or any combination thereof. To enhance solubility, solvent L can for instance be a mixture of 2 to 3 solvents. In most cases it can be sufficient to use two or more preferably only one solvent. Solvent L may especially be DMAC, NMP or NEP or any mixture thereof. For industrial production purposes it is often easier to just employ one of said preferred solvents.

To separate the water released during the reaction to give the phenylene oligomers and/or the PPSU an azeotrope-forming co-solvent like toluene or chlorobenzene may be used. Typically, it may be preferred not to employ such azeotrope-forming co-solvent. Separation of the water together with the solvent L during the heating process may generally be preferred. Loss of solvent L can be accounted for by for instance starting with a larger amount of solvent L or by adding solvent L during the reaction. The control of the viscosity increase during the reaction can also be a means to control the molecular weight of the PPSU.

The process disclosed may in general comprise - or as may be preferred essentially consists of - that starting compounds and/or the reaction of phenylene oligomers with the coupling agent are reacted in the presence of at least one base. The person skilled in the art is aware that phenolic OH groups are preferably reacted in the presence of at least one base in order to increase the reactivity toward halogen substituents. Said at least one base can typically be a hydroxide, carbonate or bicarbonate. Thus, it may be a mixture of at least one hydroxide and at least one carbonate or a mixture of at least one carbonate with at least one bicarbonate. Thereby at least one anhydrous alkali metal carbonate may be preferred. It may also be possible to for instance use a mixture of different hydroxides or different carbonates or different bicarbonates. It may be preferred to use one base. It may be preferred that the one base is one alkali metal carbonate. In particular, sodium carbonate, potassium carbonate, calcium carbonate, or a mixture thereof may be preferred, very particularly it may be preferred that potassium carbonate is used as the base. From the aspect of reaction speed and reduced amounts of side products especially potassium carbonate with a volume-weighted mean particle size of less than 100 micrometers may be preferred, for instance from 5 to 80 µm, preferably from 10 to 60 µm, such as 20 µm, 25 µm, 30 µm, 35 µm, 40 µm, 45 µm, 50 µm or 55 µm or any uneven µm size between 5 to 100 µm, determined at a suspension of the solid in chlorobenzene/sulfolane 60/40 (by weight) using a Malvern Mastersizer 2000 instrument.

A combination which can be particularly preferred is DMAC, NMP or NEP or any mixture thereof as solvent and potassium carbonate as base, especially potassium carbonate of a size of less than 100 µm. One combination which can be particularly preferred is NMP as solvent and potassium carbonate as base, especially potassium carbonate of a size of less than 100 µm, for instance from 5 to 80 µm, preferably from 10 to 60 µm, such as 20 µm, 25 µm, 30 µm, 35 µm, 40 µm, 45 µm, 50 µm or 55 µm or any uneven µm size between 5 to 100 µm, determined as described above.

The reaction of the starting compounds to give the phenylene sulfone oligomers as well as their reaction with the coupling agent can be performed at a temperature at which the reaction proceeds with an acceptable speed and yields the phenylene sulfone oligomers and the PPSU, respectively, in an acceptable quality such as having the molecular weight and the molecular weight distribution as desired. Generally, the process can be carried out at temperatures of from 80 to 250°C, preferably from 100 to 220°C. When the process is carried out in the presence of solvent L and ambient pressure the upper temperature limit is usually determined by the boiling point of solvent L. In particular when the process is carried out in the absence of a solvent the stability of the reactants can be a factor limiting the reaction temperature.

While the person skilled in the art may adapt the reaction temperatures and times to the specific PPSU to be produced, reaction temperatures in the range of from 180 to 205°C, may be applicable and temperatures from 185 to 195°C may be preferred. At the latter temperatures the reaction of the starting compounds to give the phenylene sulfone oligomers is usually fairly fast. Thus, this initial reaction time may be in the range of about 1 to about 2 hours. It can be less than 2 hours and typically more than 1 hour. The reaction of the oligomers with the coupling agent at this temperature may take an additional 2 to 20 hours, e.g. from 3 to 18 hours, for instance from 3 to 15 hours. In particular if the process is carried out in solvent L, such as NMP said conditions may be the preferred ones.

It may be possible to employ in the process at least one compound with one functional group reactive towards reactive groups comprised in a polymeric chain (compound C). It may be preferred that one compound C is used. Thereby it may be possible to control the chain length of the PPSU. Generally, a reaction with the compound C following the polycondensation reaction for instance after a conversion of at least 90% is reached may be preferred. It may be preferred that the compound C is at least one aliphatic organic halogen. This leads to further reaction of reactive end groups, in particular hydroxy end groups. The PPSU then comprises in reacted form the compound C. Such PPSU is usually stabilized inter alia against further extension of the polymer chain during the course of further processing.

Preferred at least one aliphatic organic halogen is at least one alkyl halide, in particular alkyl chloride, having linear or branched alkyl groups having from 1 to 10 carbon atoms, which can in particular be a primary alkyl chloride, particularly preferably methyl halide, in particular methyl chloride.

The reaction with the compound C can preferably be carried out at a temperature of from 90°C to 160°C, whereby temperatures in the range of from 100°C to 150°C may be preferred. The time can vary widely and is usually at least 5 minutes, in particular at least 15 minutes. The reaction time can generally preferably be from 15 minutes to 8 hours, whereby the reaction time may particular be from 30 minutes to 4 hours.

Various methods can be used for the reaction of the compound C, more specifically the at least one aliphatic organic halogen. The amounts used of the compound C, more specifically the at least one aliphatic organic halogen, can moreover be stoichiometric or represent an excess, where the excess can by way of example be up to a 5-fold excess. For example, it may be preferred that the at least one aliphatic organic halogen is added continuously, in particular via continuous introduction in the form of a stream of gas.

Reaction with the compound C can be carried out in a separate process unit or as it may be preferred directly in the polycondensation reactor.

If the process is carried out in the presence of solvent L and after the reaction is completed, further solvent L, which can for instance be the solvent L in which the reaction was carried out such as DMAC, NMP, NEP, sulfolane or any mixture thereof, e.g. DMAC, NMP, NEP or any mixture thereof, whereby NMP may be preferred, is typically added to cool the reaction mixture down. The reaction mixture can for instance be cooled to the temperature range at which the compound C can be reacted with the PPSU in a separate unit or the polycondensation reactor as described above. Thereafter, the reaction mixture may be further cooled if needed, whereby around 80°C may be preferred. If the PPSU is not reacted with the compound C it may be preferred that the reaction mixture is cooled to around 80°C. At this temperature the reaction mixture, which typically is a suspension, is taken out of the respective reaction unit, typically comprising a reaction vessel and is transferred into at least one separation unit. Said separation unit may preferably comprise a filtration unit to separate the salt formed during the reaction, e.g. potassium chloride from the reaction mixture. Depending on the viscosity of the suspension, this process may take minutes or hours such as from 30 min to 24 h, preferably 1 to 12 h. The product may then be isolated, such as via precipitation due to contacting the filtrate with a non-solvent. This can for instance be a mixture of water and at least one polar aprotic solvent. It may be preferred to use a mixture of water and a solvent L, such as DMAC, NMP, NEP, sulfolane or any mixture thereof, e.g. DMAC, NMP, NEP or any mixture thereof, whereby NMP may be preferred. Thereby, the water can generally be used in portions greater than the solvent L such as DMAC, NMP, NEP, sulfolane or any mixture thereof, e.g. DMAC, NMP, NEP or any mixture thereof, whereby NMP may be preferred. Precipitation in a water/NMP-mixture (80/20 by weight) may be most preferred. The precipitation can also be in an acidic medium, such as in a water/ NMP-mixture comprising an acid. Suitable acids are for example organic or inorganic acids for example carboxylic acid such as acetic acid, propionic acid, succinic acid or citric acid and mineral acids such as hydrochloric acid, sulfuric acid or phosphoric acid. The obtained particulate solid, e.g. powder or pearls, can be collected, typically filtered, and then typically washed and finally dried, whereby temperatures below the glass transition temperature, whereby from 80 to 150°C in the vacuum can be used advantageously.

In addition to the disclosure above, the person skilled in the art can resort to methods accessible to him by application of his general knowledge. Production processes that lead to a polyarylene ether sulfone are described by way of example in Herman F. Mark, "Encyclopedia of Polymer Science and Technology", third edition, volume 4, 2003, chapter "Polysulfones" pages 2 to 8, and also in Hans R. Kricheldorf, "Aromatic Polyethers" in: Handbook of Polymer Synthesis, second edition, 2005, pages 427 to 443. More details regarding the synthesis of OH-terminated polyarylene ether sulfones are for instance given in R. Viswanathan, B.C. Johnson, J.E. McGrath, Polymer 25 (1984) 1827. Information on the control of the molecular weight are for instance disclosed in A. Noshay, M. Matzner, C.N. Merriam, J. Polym. Sci. A-1 9 (1971) 3147.

The PPSU disclosed herein is an essentially amorphous polymer. It has the advantage that it dissolves in various solvents and that it can be processed at elevated temperatures.

A solution comprising at least one PPSU is disclosed as well. The solution comprises at least one liquid capable of dissolving the at least one PPSU (in the following also termed solute). The solution can arise from the process for the manufacture of the PPSU. In this case the solution can contain solids. The process can comprise that the solution is filtered at a temperature above room temperature. Thereby the solution can be filtered at a temperature below the boiling point of the solute. Said temperature can be consistent over the time of filtration or it can vary. Filtration can in principle be carried out in any filtration apparatus, suitable for said temperature conditions as well as the pressures required. A pore size which can be employed is in the µm range and can preferably be 10 µm or less, such as 5 µm or less. The amount of time required for the filtration depends on factors such as temperature or the employed pore size. Generally, the filtration of a solution comprising at least one PPSU can be achieved in times reasonable for industrial scale production. Usually it may be preferred that the solution comprises one PPSU - or as may be preferred consists essentially of one PPSU and the solute. Thus, typically the filtrate is a solution consisting essentially of one PPSU and the solute. In particular, in the case where the solution arises from the process, the solution usually comprises only one PPSU. It is also possible that the solution is prepared by contacting at least one PPSU, preferably one PPSU, with the solute. Under the aspect of solvent removal after use the amount of solute is preferably kept to a minimum. The amount of solute often depends on the desired viscosity of the solution at the temperature of handling the solution and the intended use. The amount of the solute needs to be sufficient to dissolve the at least one PPSU at the temperature desired for handling the solution. Conveniently the solute is at least one solvent L, such as DMAC, NMP, NEP, sulfolane or any mixture thereof, e.g. DMAC, NMP, NEP or any mixture thereof, whereby NMP may be preferred. The solution comprising the PPSU usually has a reduced tendency to gel. It therefore typically has a convenient timespan for processing it.

The solution can in particular be used in the preparation of coatings, films, fibers or membranes. For this purpose, the solution may be mixed with further compounds, such as processing adjuvants and/or further polymers. Thus, the solution may for instance comprise at least one other polyarylene(ether) sulfone and/or at least one polyvinylpyrrolidone, the latter being usually preferred under the aspect of membrane formation. Thus, the solution may comprise said further components or - as may be preferred - consists essentially of at least one PPSU, at least one solute and at least one other polyarylene(ether) sulfone and/or at least one polyvinylpyrrolidone.

The use of at least one PPSU disclosed herein or obtainable by the process disclosed herein for the production of coatings, fibers, films, foams, moldings and/or membranes is also disclosed herein.

A fiber is for example a more or less flexible structure which is thin in relation to the length. A fiber can be compact or hollow. A fiber can be round or almost round or can have a different cross-sectional shape. It can for instance be flat. A fiber can also be tubelike. A fiber may have a smooth surface, or it may have pores or holes. A fiber can be obtained for example by an extrusion method. It may be more preferred that a fiber from at least one PPSU, whereby generally one PPSU is preferred, is obtained by a spinning method. Spinning from the solution can be advantageous if thermal stress on the at least one PPSU is a concern. The spinning can for instance be carried out directly after the separation of the PPSU from the salt. It is also possible to isolate the PPSU first and then to dissolve it in the solvent to be used for the spinning. To improve the mechanical properties of a fiber it can be advantageous to spin the at least one PPSU, whereby generally one PPSU is preferred, which can be as it may be preferred, from the solution by an electrospinning method, including magnetic electrospinning. Electrospinning may for instance be most preferred in case of the production of a fiber which is a nanofiber. Magnetic electrospinning may be employed for the production of nonwovens from the at least one PPSU, whereby generally one PPSU is preferred. As the electrospinning method requires that the melt or, which may be preferred, the solution is conductive it may not be necessary to separate the salt, all or essentially all of the salt from the reaction mixture after the reaction. The solution comprising one PPSU which consists essentially of benzophenone coupled phenylene sulfone segments A and B of formula I and does not comprise structurally different units may be preferred for the production of a fiber by an electrospinning method.

A molding can essentially be a solid geometric body which can be produced, for example, by molding processes, injection molding, extrusion, calendering, rotomolding, foaming, blow-molding processes, forming processes or joining processes. The molding can be prepared from the PPSU. Likewise, it is possible that the molding is prepared from a mixture comprising at least one PPSU, whereby the mixture may also comprise at least one further polymeric resin. Typically, a mixture employed for the manufacture of moldings in addition to at least one PPSU and optionally at least one further polymeric resin comprises at least one processing additive and/or filler. The molding comprising at least one PPSU generally shows good flame-retardant properties as well as good resistance against hydraulic fluids. Examples for preferred moldings are airplane connectors and spacers for airplane fuselage exterior, which usually is an aluminum shell.

A membrane is for instance a separating layer. A membrane may be understood to mean an impermeable, partly impermeable or selectively permeable membrane, or a membrane which is pervious in one direction or a pervious membrane. The type of membrane is generally not restricted. Also, the membrane may for instance be a reverse osmosis (RO) membrane, a forward osmosis (FO) membrane, a nanofiltration (NF) membrane, an ultrafiltration (UF) membrane or microfiltration (MF) membrane. In many cases it may be preferred that the membrane is an UF, a NF or a MF membrane.

The PPSU disclosed herein can be used in different filter membrane geometries. For instance, it can be used in a flat membrane and/or in a capillary-like hollow fiber membrane. The flow toward these membranes may take the form of a dead-end flow or of a crossflow.

The membrane may be produced using at least one PPSU, whereby it can be preferred that it is produced from one PPSU. Typically, the membrane can be prepared according to methods known to those skilled in the art. The membrane may for instance be manufactured by casting from the solution. Thereby a casting solution can be prepared. Said casting solution typically contains at least one, as is preferred in many cases one, compound which can be removed by washing from the membrane. Said compound is often also termed as pore former. Thus, in this case the solution also comprises said pore former. For the purposes of the manufacture of the membrane from at least one PPSU, polyvinylpyrrolidone and/or polyethylene glycol (PEG) can often be used as pore former in a casting solution.

The membrane can be used in contact with water. In particular, the membrane can be used in conjunction with water purification. More specifically the membrane can be employed in the purification of water contaminated or loaded with hydraulics fluids, petrol and/or fuel, such as arising out of spills in daily life or out of industrial processing environments. Advantageously the membrane can in particular be employed in the purification of produced water such as water that arises from oil and gas manufacturing processes, which can be fracking processes or the recycling of desalinated water on oil platforms.

An article comprising at least one membrane can for instance be a filtration system such as a filter apparatus, a module row or a module rack.

### Examples:

The examples below provide further explanation of the invention, but do not restrict the same.

Definitions and Abbreviations:

| | |
|---|---|
| Reaction time: | time during which the reaction mixture was kept at 190°C. |
| DCDPS: | 4,4'-dichlorodiphenylsulfone |
| BP: | 4,4'-dihydroxybiphenyl |
| NMP: | N-methyl-2-pyrrolidone |

The particle size of the potassium carbonate was determined at a suspension of the solid in chlorobenzene/sulfolane 60/40 (by weight) using a Malvern Mastersizer 2000 instrument as described above.

The chain length x of the oligomers was determined by potentiometic titration of the OH groups and elemental analysis of the organic Cl-content of the precipitated and dried sample taken from the reactor prior to the addition of 4,4'-dichlorobenzophenone . The calculated values correspond to the number average molecular weight of the oligomer.

The time required for filtering the polymer solutions was determined.

The obtained polymers were processed into granules using a ZSK 18-extruder. The throughput was 2.5 kg/h at 300rpm, the melt temperature, measured with a thermometer directly in the melt cake was below 385°C. From the so obtained granules ISO-bars (80mm x10mm x4mm) and S2-tensile bars were prepared at a mass temperature of 370 °C and a tool temperature of 140°C.

The solution viscosity (V.N.) was determined using a solution of 0,01g/ml polymer in N-methylpyrrolidone at 25°C (DIN EN ISO 1628-1 (October 2012)).

The glass transition temperatures (Tg) and the melting points (Tm) of the polymers were determined by DSC analysis with a heating rate of 20 K/min. The figures reported for the glass transition temperature, the melting point and the melting heat are the values determined in the 2nd heating run.

The melt stability of the samples was determined using a capillary rheometer at a mass temperature of 400°C for 60 minutes. Thereby the apparent viscosity of the melt was determined at a shear rate of 55s⁻¹ every 5 minutes. The quotient (Q) of the apparent viscosity determined at 60 minutes over the apparent viscosity determined at 5 minutes is a measure for the melt stability.

The resistance of the products against hydraulics fluids, petrol and/or fuel was determined as resistance against Skydrol^{®} LD4 (58wt% tributyl phosphate, 20-30 wt% dibutylphenyl phosphate, 5-10 wt% butyldiphenyl phosphate, 1-5 wt% 2,6-di-terbutyl-p-kresol, less than 10 wt% carboxylate). S2-tensile bars were stored in Skydrol^{®} LD4 for 24 hours. In each case 2 of the S2-tensile bars were bent to a bending radius of 132 mm using a stencil prior to storing them. Using a camera, a picture was taken every minute to determine the time until break.

The results of the measurements are given in Table 1.

Preparation of the Polymers - General procedural measures used in each case
A vessel equipped with a stirrer, Dean-Stark-trap, nitrogen-inlet and temperature control was used. 304,05 g (2,20 mol) potassium carbonate with a volume average particle size of 34,5 µm was used. The water that was formed in the reaction was continuously removed by distillation. An azeotrope former was not employed. Lost NMP was replaced.

After the reaction time, 1500 ml NMP were added to the vessel and the temperature of the reaction mixture was adjusted to 135°C. Then methyl chloride was added to the vessel for 60 minutes. Then nitrogen was purged through the reaction mixture for another 30 minutes. The reaction mixture was then cooled to 80°C and was then transferred into a heated pressure filter (80°C) to separate the potassium chloride formed in the reaction mixture by filtration.

Filtration was carried out at a nitrogen pressure of 2.0 bar, using a filter of a pore size of 3µm.

The polymers were isolated from the filtrate by precipitating the filtrate into a bath of desalinated water at room temperature (falling distance 0.5m, throughput appr. 2.5 l/h). The obtained pearls were collected and washed with water at 85°C for 20 h (water throughput 160 l/h) Thereafter the pearls were dried at a temperature below the glass transition temperature. The residual moisture content was less than 0.1 wt-%.

Small amounts of materials were precipitated for those samples which could not be filtered. Thereafter they were washed with water and dried at 120° C for 24 h. The residual moisture content was less than 0.1 wt-%.

### Comparative Copolymer C1

In the vessel 522,63 g (1,82 mol) of DCDPS, 372,41 g (2,00 mol) of BP, 50,22 g (0,20 mol) 4,4'-dichlorobenzophenone, and the potassium carbonate were dissolved respectively suspended in 1152 ml NMP in a nitrogen atmosphere.

The mixture was heated to 190°C within one hour. Thereafter, the reaction time was 5h.

Filtration took 8 h.

The polymer was then isolated from the filtrate and dried.

### Comparative Copolymer C2

In the vessel 522,63 g (1,82 mol) of DCDPS, 372,41 g (2,00 mol) of BP, and the potassium carbonate were dissolved respectively suspended in 952 ml NMP in a nitrogen atmosphere.

The mixture was heated to 190°C within one hour. The initial reaction time was 70 minutes.

Thereafter, 20 ml of the suspension were separated. Then, 50,22 g (0,200 mol) of 4,4'-dichlorobenzophenone dissolved in 200 ml NMP were charged to the vessel. At 190°C the reaction was continued. The reaction time was 4h.

Filtration took 8.5 h.

The obtained polymer was then isolated and dried.

### Comparative Copolymer C3

In the vessel 508,28 g (1,77 mol) of DCDPS, 372,41 g (2,00 mol) of BP, 62,78 g (0,25 mol) of 4,4'-dichlorobenzophenone, and the potassium carbonate were dissolved respectively suspended in 1152 ml NMP in a nitrogen atmosphere.

The mixture was heated to 190°C within one hour. The reaction time was 5h.

Filtration took 10 h.

The polymer was then isolated from the filtrate and dried.

### PPSU 1

In the vessel 508,28 g (1,77 mol) of DCDPS, 372,41 g (2,00 mol) of BP, and the potassium carbonate were dissolved respectively suspended in 952 ml NMP in a nitrogen atmosphere.

The mixture was heated to 190°C within one hour. The initial reaction time was 70 minutes.

Thereafter, 20 ml of the suspension were separated. Then, 62,78 g (0,250 mol) of 4,4'-dichlorobenzophenone dissolved in 200 ml NMP were charged to the vessel.

At 190°C the reaction was continued. The reaction time was 4 h.

Filtration took 7.5 h.

The polymer was then isolated from the filtrate and dried.

### Comparative Example C4

In the vessel 493,92 g (1,72 mol) of DCDPS, 372,41 g (2,00 mol) of BP, 75,33 g (0,3 mol) of 4,4'-dichlorobenzophenone, and the potassium carbonate were dissolved respectively suspended in 1152 ml NMP in a nitrogen atmosphere.

The mixture was heated to 190°C within one hour. The reaction time was 5,5 h.

Filtration took 12 h.

The polymer was then isolated from the filtrate and dried.

### PPSU 2

In the vessel 493,92 g (1,72 mol) of DCDPS, 372,41 g (2,00 mol) of BP, and the potassium carbonate were dissolved respectively suspended in 952 ml NMP in a nitrogen atmosphere.

The mixture was heated to 190°C within one hour. The initial reaction time was 70 minutes.

Thereafter, 20 ml of the suspension were separated. Then, 75,33 g (0,30 mol) of 4,4'-dichlorobenzophenone dissolved in 200 ml NMP were charged to the vessel. At 190°C the reaction was continued. The reaction time was 5 h.

Filtration took 8 h.

The polymer was then isolated from the filtrate and dried.

### Comparative Copolymer C5

In the vessel 465,20 g (1,62 mol) of DCDPS, 372,41 g (2,00 mol) of BP, 100,44 g (0,4 mol) of 4,4'-dichlorobenzophenone, and were dissolved respectively suspended in 1152 ml NMP in a nitrogen atmosphere.

The mixture was heated to 190°C within one hour. The reaction time was 6 h.

Filtration took 14 h.

The polymer which could be obtained was then isolated from the filtrate and dried.

### PPSU 3

In the vessel 465,20 g (1,62 mol) of DCDPS, 372,41 g (2,00 mol) of BP, and the potassium carbonate were dissolved respectively suspended in 952 ml NMP in a nitrogen atmosphere.

The mixture was heated to 190°C within one hour. The initial reaction time was 70 minutes.

Thereafter, 20 ml of the suspension were separated. Then, 100,44 g (0,40 mol) of 4,4'-dichlorobenzophenone dissolved in 200 ml NMP were charged to the vessel. At 190°C the reaction was continued. The reaction time was 5.5 h.

Filtration took 10 h.

The polymer was then isolated from the filtrate and dried.

### Comparative Copolymer C6

In the vessel 450,86 g (1,57 mol) of DCDPS, 372,41 g (2,00 mol) of BP, and the potassium carbonate were dissolved respectively suspended in 952 ml NMP in a nitrogen atmosphere.

The mixture was heated to 190°C within one hour. The initial reaction time was 70 minutes.

Thereafter, 20 ml of the suspension were separated. Then, 113,00 g (0,45 mol) of 4,4'-dichlorobenzophenone dissolved in 200 ml NMP were charged to the vessel. At 190°C the reaction was continued. The reaction time was 6 h.

Even after a filtration time of 24 h only a minor part of the solution was filtered.

After 24 h the solution became a gel, and precipitation was only possible after diluting 20 ml solution/gel with 20 ml NMP and heating up to 120°C.

The polymer which could be obtained was then isolated from the filtrate and dried.

### Comparative Copolymer C7

In the vessel 450,86 g (1,57 mol) of DCDPS, 372,41 g (2,00 mol) of BP, 113,00 g (0,45 mol) of 4,4'-dichlorobenzophenone, and the potassium carbonate were dissolved respectively suspended in 1152 ml NMP in a nitrogen atmosphere.

The mixture was heated to 190°C within one hour. The reaction time was 6 h.

Even after a filtration time of 24 h only a minor part of the solution was filtered. After 24 h the solution became a gel, and precipitation was only possible after diluting 20 ml solution/gel with 20 ml NMP and heating up to 120°C.

The polymer which could be obtained was then isolated from the filtrate and dried.

As can be seen from the results of the measurements given below in Table 1 that for the PPSU consisting essentially of benzophenone coupled segments of a chain length x in the range of 4.5 to 9 the properties aimed at could be observed. At higher chain lengths the resistance against Skydrol^{®} was not given. At lower chain lengths the samples could not be processed in an easy way.

**Table 1**

| Example | C1 | C2 | C3 | 1 | C4 | 2 | C5 | 3 | C6^{a)} | C7^{a)} | C8^{b)} |
|---|---|---|---|---|---|---|---|---|---|---|---|
| CI-BPO [mol-% based on CI-Monomers], charged | 9.9 | 9.9 | 12.4 | 12.4 | 14.9 | 14.9 | 19.8 | 19.8 | 22.3 | 22.3 | |
| | | | | | | | | | | | |
| Reaction modus | 5h | 70min | 5h | 70min | 5.5h | 70min | 6.5h | 70min | 70min | 6h | |
| | | 4h | | 4h | | 5h | | 5.5h | 6h | | |
| Filtration [h] | 8 | 8.5 | 10 | 7.5 | 12 | 8 | 14 | 10 | >24 | >24 | <6 |
| | | | | | | | | | | | |
| Chain length segments [g/mol] | - | 4290 | - | 3290 | - | 2710 | - | 2130 | 1820 | - | - |
| Chain length segments x | - | 10.25 | - | 7.75 | - | 6.30 | - | 4.85 | 4.08 | - | - |
| | | | | | | | | | | | |
| VN [ml/g] | 68.5 | 69.3 | 72.9 | 70.7 | 67.1 | 68.2 | 66.2 | 65.3 | - | - | 71.6 |
| Tg [°C] | 211 | 210 | 207 | 207 | 206 | 205 | 205 | 202 | 201 | 200 | 219 |
| Tm [°C] | - | - | - | - | | - | - | - | 298 | 299 | |
| ΔHm [J/g] | - | - | - | - | | - | - | - | 2.9 | 5.2 | |
| Skydrol Res. [h] | <2 | <1 | 5 | >24 | >24 | >24 | >24 | >24 | - | - | <2 |
| Q | 1.5 | 1.6 | 1.6 | 1.5 | 1.8 | 1.4 | 1.6 | 1.4 | - | - | 1.3 |
| Appearance Plate | Tr.^{c)} | Tr. | Tr. | Tr. | Tr. | Tr. | - | Tr. | - | - | Tr. |

| | | | | | | | | | | | |
|---|---|---|---|---|---|---|---|---|---|---|---|
| ^{a)} no homogeneous solution for viscosity measurements in NMP was obtained ^{b)} Polyphenylene ether sulfone not derived from benzophenone monomers (commercially available from BASF SE, Ultrason^{®} P 3010) ^{c)} Transparent | | | | | | | | | | | |

## Claims

1. A polyphenylene sulfone (PPSU) consisting essentially of benzophenone coupled phenylene sulfone segments A and B of formula I 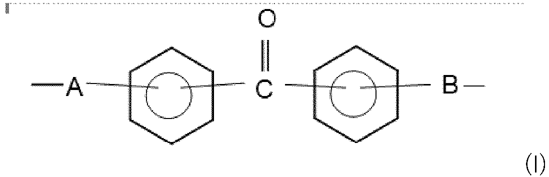 wherein segments A and B can be same or different and are of formula II 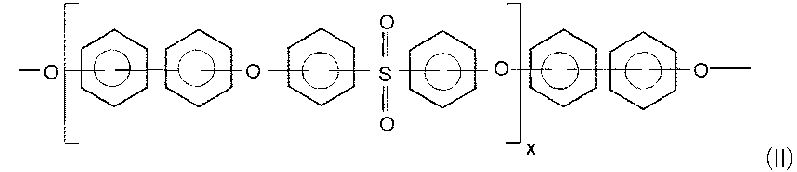 wherein x is of from 4.5 to 9.

2. The polyphenylene sulfone according to claim 1 wherein x is of from 4.5 to 7.

3. The polyphenylene sulfone according to 1 or 2 which is linear.

4. Solution comprising the polyphenylene sulfone according to any one of the claims 1 to 3.

5. Solution according to claim 4 comprising N-methyl-2-pyrrolidone, dimethylacetamide and/or sulfolane.

6. A process for making the polyphenylene sulfone according to any one of the claims 1 to 3 comprising reacting at least one dihalodiphenylsulfone with at least one dihydroxybiphenyl to give phenylene sulfone oligomers of a number average degree of polymerization in the range from 4.5 to 9 and reacting said oligomers with at least one dihalobenzophenone.

7. The process according to claim 6 comprising that the reacting is carried out as a one-pot reaction.

8. The process according to claim 6 or 7 comprising that the reacting is carried out in the presence of N-methyl-2-pyrrolidone, N-ethyl-2-pyrrolidone, dimethylacetamide and/or sulfolane.

9. The process according to claim 8 comprising filtering the solution according to claim 4 at a temperature above room temperature.

10. Use of the polyphenylene sulfone according to any one of the claims 1 to 3 or obtained from the process according to any one of the claims 6 to 9 in the manufacture of a coating, film, fiber, foam, membrane or molded article.

11. Use of the solution according to claim 4 or 5 in the manufacture of a coating, film, fiber or membrane.

12. The use according to claim 10 or 11 in the manufacture of a membrane.

13. A membrane comprising at least one polyphenylene sulfone according to any one of the claims 1 to 3.

14. An article comprising a membrane according to claim 13.

15. Use of a membrane according to claim 13 or an article according to claim 14 in the purification of water.

16. Use according to claim 15 of produced water in a fracking process or the recycling of desalinated water on oil platforms.

## Patentansprüche

1. Polyphenylensulfon (PPSU), im Wesentlichen bestehend aus Benzophenon-gekoppelten Phenylensulfon-Segmenten A und B der Formel I 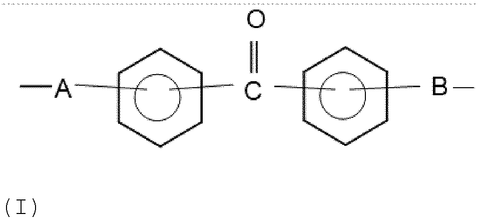 wobei die Segmente A und B gleich oder verschieden sein können und die Formel II aufweisen: 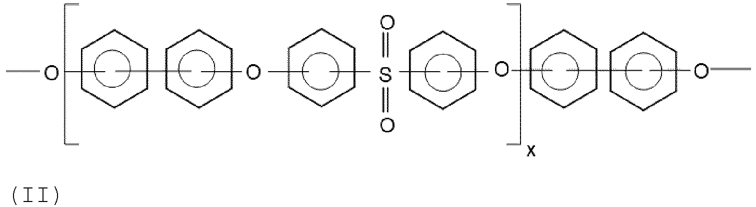 wobei x für 4,5 bis 9 steht.

2. Polyphenylensulfon nach Anspruch 1, wobei x für 4,5 bis 7 steht.

3. Polyphenylensulfon nach Anspruch 1 oder 2, das linear ist.

4. Lösung, umfassend das Polyphenylensulfon nach einem der Ansprüche 1 bis 3.

5. Lösung nach Anspruch 4, umfassend N-Methyl-2-pyrrolidon, Dimethylacetamid und/oder Sulfolan.

6. Verfahren zur Herstellung des Polyphenylensulfons nach einem der Ansprüche 1 bis 3, umfassend das Umsetzen von mindestens einem Dihalogendiphenylsulfon mit mindestens einem Dihydroxybiphenyl zu Phenylensulfon-Oligomeren mit einem zahlenmittleren Polymerisationsgrad im Bereich von 4,5 bis 9 und das Umsetzen der Oligomere mit mindestens einem Dihalogenbenzophenon.

7. Verfahren nach Anspruch 6, **dadurch gekennzeichnet, dass** die Umsetzung als Eintopfreaktion durchgeführt wird.

8. Verfahren nach Anspruch 6 oder 7, umfassend das Durchführen der Umsetzung in Gegenwart von N-Methyl-2-pyrrolidon, N-Ethyl-2-pyrrolidon, Dimethylacetamid und/oder Sulfolan.

9. Verfahren nach Anspruch 8, umfassend das Filtrieren der Lösung nach Anspruch 4 bei einer Temperatur oberhalb Raumtemperatur.

10. Verwendung des Polyphenylensulfons nach einem der Ansprüche 1 bis 3 oder des aus dem Verfahren nach einem der Ansprüche 6 bis 9 erhaltenen Polyphenylensulfons bei der Herstellung einer Beschichtung, einer Folie, einer Faser, eines Schaumstoffs, einer Membran oder eines Formkörpers.

11. Verwendung der Lösung nach Anspruch 4 oder 5 bei der Herstellung einer Beschichtung, Folie, Faser oder Membran.

12. Verwendung nach Anspruch 10 oder 11 bei der Herstellung einer Membran.

13. Membran, umfassend mindestens ein Polyphenylensulfon nach einem der Ansprüche 1 bis 3.

14. Gegenstand, umfassend eine Membran nach Anspruch 13.

15. Verwendung einer Membran nach Anspruch 13 oder eines Gegenstands nach Anspruch 14 bei der Reinigung von Wasser.

16. Verwendung nach Anspruch 15 von gefördertem Wasser bei einem Fracking-Verfahren oder der Rezyklierung von entsalztem Wasser auf Ölplattformen.

## Revendications

1. Polyphénylène sulfone (PPSU) constituée essentiellement de segments de phénylène sulfone couplés à une benzophénone A et B de formule I 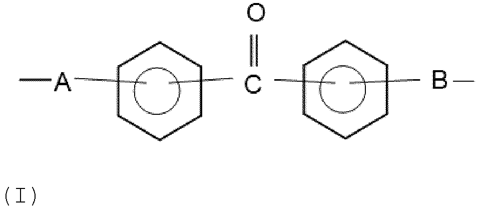 dans laquelle les segments A et B peuvent être identiques ou différents et sont de formule II 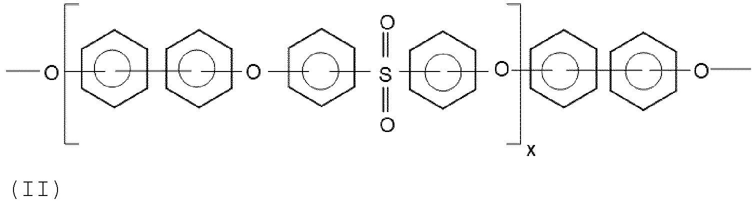 dans laquelle x est de 4,5 à 9.

2. Polyphénylène sulfone selon la revendication 1, dans laquelle x est de 4,5 à 7.

3. Polyphénylène sulfone selon la revendication 1 ou 2 qui est linéaire.

4. Solution comprenant la polyphénylène sulfone selon l'une quelconque des revendications 1 à 3.

5. Solution selon la revendication 4, contenant de la N-méthyl-2-pyrrolidone, du diméthylacétamide et/ou du sulfolane.

6. Procédé de préparation de la polyphénylène sulfone selon l'une quelconque des revendications 1 à 3, comprenant la mise en réaction d'au moins une dihalogénodiphénylsulfone avec au moins un dihydroxybiphényle pour donner des oligomères de phénylène sulfone d'un degré de polymérisation moyen en nombre dans la plage de 4,5 à 9 et la mise en réaction desdits oligomères avec au moins une dihalogénobenzophénone.

7. Procédé selon la revendication 6, **caractérisé en ce que** la mise en réaction est effectuée sous forme d'une réaction en un pot.

8. Procédé selon la revendication 6 ou 7, **caractérisé en ce que** la réaction est effectuée en présence de N-méthyl-2-pyrrolidone, N-éthyl-2-pyrrolidone, diméthylacétamide et/ou sulfolane.

9. Procédé selon la revendication 8, comprenant la filtration de la solution selon la revendication 4 à une température supérieure à la température ambiante.

10. Utilisation de la polyphénylène sulfone selon l'une quelconque des revendications 1 à 3 ou obtenue par le procédé selon l'une quelconque des revendications 6 à 9 dans la fabrication d'un revêtement, d'un film, d'une fibre, d'une mousse, d'une membrane ou d'un article moulé.

11. Utilisation de la solution selon la revendication 4 ou 5 dans la fabrication d'un revêtement, d'un film, d'une fibre ou d'une membrane.

12. Utilisation selon la revendication 10 ou 11 dans la fabrication d'une membrane.

13. Membrane comprenant au moins une polyphénylène sulfone selon l'une quelconque des revendications 1 à 3.

14. Article comprenant une membrane selon la revendication 13.

15. Utilisation d'une membrane selon la revendication 13 ou d'un article selon la revendication 14 dans la purification de l'eau.

16. Utilisation selon la revendication 15 d'eau produite dans un procédé de fracturation hydraulique ou le recyclage d'eau dessalée sur des plates-formes pétrolières.
